# EUROPEAN PATENT APPLICATION

(11) **EP 2 730 997 A2**
(43) Date of publication of application: **14.05.2014**
(21) Application number: 13190354.4
(22) Date of filing: 25.10.2013
(51) Int. Cl.: G06F 3/041, G06K 9/22, G06F 3/0354

(54) **Information input device**

(30) Priority: 09.11.2012 JP 2012247834
(71) Applicant: Brother Kogyo Kabushiki Kaisha, Nagoya, Aichi 467-8561 (JP)
(72) Inventor: Sakabe, Takuji, Nagoya, Aichi 467-8562 (JP); Inaba, Takehiko, Nagoya, Aichi 467-8562 (JP); Iriyama, Yasuhiro, Nagoya, Aichi 467-8562 (JP)
(74) Representative: Smith, Samuel Leonard

(57) **Abstract**

An electromagnetic induction-type information input device that is capable of acquiring information input by a user using a writing tool causes first and second sensors to each perform processing that detects an output signal output from the writing tool (step S3). Among the first and second sensors, the sensor that has detected an output signal having the largest strength is identified as an identified sensor (step S7). A supply of electric power is stopped to a non-identified sensor, which is the sensor other than the identified sensor (step S9 or step S21). After the supply of electric power is stopped to the non-identified sensor, the identified sensor performs processing that detects a signal output from the writing tool (step S11 or step S23). Based on a detection result, a position of the writing tool is identified (step S 13 or step S25).

## Description

### BACKGROUND

The present invention relates to an electromagnetic induction-type information input device configured to acquire information input by a user using a writing tool.

A device is known into which data that corresponds to content handwritten by a user using a writing tool can be input. For example, an electronic writing device disclosed in Japanese Laid-Open Patent Application No. 2012-14411 is an electromagnetic induction-type digitizer. This electronic writing device has a sheet body formed of a flexible member that can be opened to and closed from a two-page spread state. The sheet body includes a group of loop coils that are arranged to be parallel to each other in an X direction and a group of loop coils that are arranged to be parallel to each other in a Y direction, the X direction and the Y direction being orthogonal to each other. The electronic writing device detects a position of a writing tool using the groups of loop coils provided in the sheet body. When a user uses the writing tool to write characters etc. by hand on a writing target that is arranged on the sheet body in an overlapping manner, the electronic writing device generates stroke data representing a movement trajectory of the writing tool. The electronic writing device calculates a writing direction based on time series variations in the generated stroke data. When the user starts to use the electronic writing device, the electronic writing device receives an input relating to a setting of the writing direction. The electronic writing device scans one page only of the sheet body, the page being determined based on the calculated writing direction and the set writing direction.

### SUMMARY

With the above-described electronic writing device, there may be a case in which a magnetic field that should be detected by the group of loop coils corresponding to one of the pages of the two-page spread of the writing target is detected by the other group of loop coils corresponding to the other page of the two-page spread of the writing target. In this type of case, it is possible that the electronic writing device cannot accurately detect the position of the writing tool.

It is an object of the present invention to provide an electromagnetic induction-type information input device that is capable of acquiring information input by a user using a writing tool, and that has improved detection accuracy of a position of the writing tool.

An information input device according to one aspect of the present invention is an electromagnetic induction-type information input device configured to acquire information input by a user using a writing tool. The information input device includes a plurality of detection means for detecting an output signal output from the writing tool and for outputting a detection result, first detection control means for causing each of the plurality of detection means to perform detection processing that detects the output signal, detection identification means for identifying identified detection means, based on the detection results output from the plurality of detection means in response to the control of the first detection control means, electric power control means for stopping a supply of electric power to non-identified detection means, second detection control means for causing the identified detection means to perform the detection processing after the electric power control means has stopped the supply of electric power to the non-identified detection means, and position identification means for identifying a position of the writing tool, based on the detection result output from the identified detection means in response to the control of the second detection control means. The identified detection means is detection means, among the plurality of detection means, that has detected an output signal having a largest strength among the output signals detected by the plurality of detection means. The non-identified detection means is one or more of the plurality of detection means, other than the identified detection means identified by the detection identification means.

The information input device supplies electric power only to the identified detection means that has detected the output signal output from the writing tool and stops the supply of electric power to the non-identified detection means. The information input device can reduce power consumption in comparison to a case in which the electric power is always supplied to all of the plurality of detection means. Further, the information input device controls the identified detection means to identify the position of the writing tool after the supply of the electric power to the non-identified detection means is stopped. For that reason, in comparison to a case in which the identification of the position of the writing tool is performed in a state in which the electric power is supplied to all of the plurality of detection means, in the information input device, there is little influence of the magnetic field generated by the other detection means that is included in the detection result of the identified detection means. As a result, the information input device can improve the detection accuracy of the position of the writing tool compared to known art.

In the information input device, each of the plurality of detection means may output an input signal to the writing tool and may detect the output signal output from the writing tool in response to the input signal. With an information input device of a type in which a writing tool outputs an output signal in response to an input signal output by detection means, it is possible that the input signal output by the detection means other than the identified detection means may be received by the identified detection means. In this case, it is possible that the information input device cannot accurately identify the position of the writing tool. In contrast to this, with the information input device according to the present invention, when the position of the writing tool is identified, the supply of electric power to the non-identified detection means is stopped and thus the input signal is not output from the non-identified detection means. For this reason, the information input device can reliably avoid deterioration in the detection accuracy of the position of the writing tool due to the input signal being output by the non-identified detection means.

In the information input device, the first detection control means may cause each of the plurality of detection means to perform the detection processing in a same period. In this case, in comparison to a case in which the processing that detects the output signal from the writing tool is performed by a plurality of detection means at different timings, the information input device can shorten an amount of time required for the processing to identify the identified detection means.

The information input device may further include a plurality of housings for separately housing the plurality of detection means, respectively. In this case, the information input device can stop the supply of the electric power separately for each of the plurality of detection means housed in the housings.

### BRIEF DESCRIPTION OF THE DRAWINGS

FIG. 1 is a perspective view of an information input device 2;

FIG. 2 is a block diagram showing an electrical configuration of the information input device 2; and

FIG. 3 is a flowchart of main processing.

### DETAILED DESCRIPTION

Hereinafter, an embodiment of the present invention will be explained with reference to the drawings. The drawings referred to are merely used to explain technological features that can be adopted. Configurations of devices noted in the drawings, and flowcharts of various processing etc. are not intended to limit the present invention to the examples given and are simply explanatory examples.

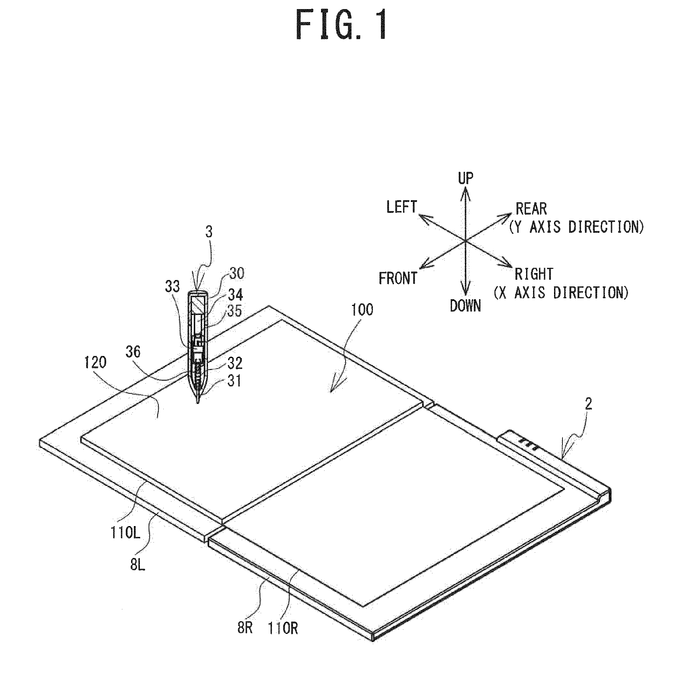

An overview of an information input device 2 according to the present embodiment will be explained with reference to FIG. 1. In the following explanation, the upper side, the lower side, the upper left side, the lower right side, the upper right side and the lower left side of FIG. 1 respectively define the upper side, the lower side, the left side, the right side, the rear side and the front side of the information input device 2.

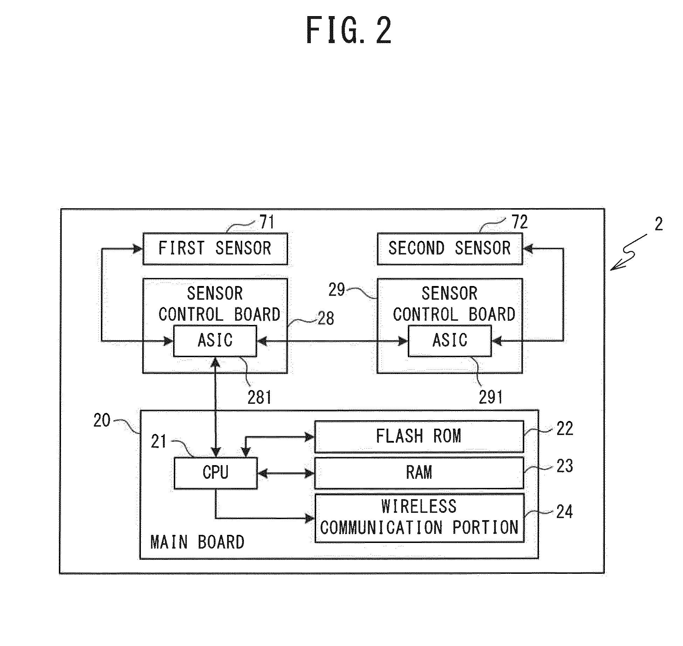

The information input device 2 is an ultra-thin light weight hand-writing input device. When a user writes information with an electronic pen 3 on a paper medium 100 that is mounted on the information input device 2, the information input device 2 chronologically detects and digitizes positions of the electronic pen 3. As shown in FIG. 1, the information input device 2 includes housings 8L and 8R. Each of the housings 8L and 8R is a rectangular thin plate-like member made of plastic. An arrangement of the information input device 2 can be changed between a state in which the housings 8L and 8R are spread out in the left-right direction as shown in FIG. 1, and a state in which the housings 8L and 8R are folded over (not shown in the drawings). The housing 8L houses a first sensor 71, a sensor control board 28 and a main board 20 that will be explained later with reference to FIG. 2. The housing 8R houses a second sensor 72 and a sensor control board 29 that will be explained later with reference to FIG. 2.

The electronic pen 3 is a known electromagnetic induction-type electronic pen. The electronic pen 3 includes a cylindrical body 30, a core body 31, a coil 32, a variable capacity condenser 33, a board 34, a condenser 35 and an ink storage portion 36. The cylindrical body 30 has a cylindrical shape and internally houses part of the core body 31, the coil 32, the variable capacity condenser 33, the board 34, the condenser 35 and the ink storage portion 36. The core body 31 is provided on the leading end portion of the electronic pen 3. The core body 31 is urged toward the leading end of the electronic pen 3 by an elastic member that is not shown in the drawings. The leading end portion of the core body 31 protrudes to the outside of the cylindrical body 30. The rear end of the core body 31 is connected to the ink storage portion 36 in which ink is stored. The ink storage portion 36 supplies ink to the core body 31. When the user writes using the electronic pen 3, the written characters (letters, numerals and graphics etc.) are formed using the ink.

In a state in which the coil 32 is wound around the periphery of the ink storage portion 36, the coil 32 is held between the core body 31 and the variable capacity condenser 33. The variable capacity condenser 33 is fixed to the inside of the electronic pen 3 by the board 34. The condenser 35 is mounted on the board 34. The condenser 35 and the variable capacity condenser 33 are connected in parallel to the coil 32 and form a known resonance (tuning) circuit.

The paper medium 100 has a notebook form in which a plurality of paper sheets 120 are bound between a front cover sheet 110L and a back cover sheet 110R and can be opened out to a two-page spread in the left-right direction. Specifically, in the paper medium 100, the pair of cover sheets (the front cover sheet 110L and the back cover sheet 110R) and the plurality of paper sheets 120 are bound by a part of their edges. The paper medium 100 may be mounted on the information input device 2 such that the front cover sheet 110L is placed on the upper surface of the housing 8L and the back cover sheet 110R is placed on the upper surface of the housing 8R. When the paper medium 100 is mounted on the information input device 2, the user can write information on the paper sheet 120, using the electronic pen 3. Position information of the electronic pen 3 that writes the information on the paper sheet 120 can be detected by one of the first sensor 71 and the second sensor 72 that face the paper sheet 120.

An electrical configuration of the information input device 2 will be explained with reference to FIG. 2. The information input device 2 includes the main board 20, the first sensor 71, the second sensor 72 and the sensor control boards 28 and 29.

The main board 20 is provided with a CPU 21, a flash ROM 22, a RAM 23 and a wireless communication portion 24. The flash ROM 22, the RAM 23 and the wireless communication portion 24 are electrically connected to the CPU 21. The CPU 21 is configured to perform control of the information input device 2. Various programs to be executed by the CPU 21 to perform control of the information input device 2 are stored in the flash ROM 22. Further, stroke data representing a trajectory of the electronic pen 3 that writes information on the paper sheet 120 may be stored in the flash ROM 22. The stroke data specifies the trajectory of the electronic pen 3 that writes information on the paper sheet 120 using a plurality of pieces of position information (coordinate information, for example) of the electronic pen 3 that are detected chronologically by the first sensor 71 and the second sensor 72. Various data, such as arithmetic data, may be temporarily stored in the RAM 23. The wireless communication portion 24 is a controller that is configured to perform near-field wireless communication with an external electronic device.

The first sensor 71 and the second sensor 72 each include a plurality of long thin loop coils arrayed at a predetermined interval in an X axis direction (left-right direction) and a Y axis direction (front-rear direction), respectively. The first sensor 71 is electrically connected to an application-specific integrated circuit (ASIC) 281 of the sensor control board 28. The ASIC 281 is configured to control the first sensor 71 and to case the first sensor 71 to perform a scan operation that will be explained later. Although not shown in the drawings, the ASIC 281 includes a power switching circuit, an amplifier circuit and a rectifying circuit. The power switching circuit is configured to switch the power supply to the first sensor 71 on or off. The amplifier circuit is configured to amplify a signal input from the first sensor 71. The rectifying circuit is configured to smooth the signal input from the amplifier circuit after detecting the amplitude of the signal, and to convert it to a direct current signal. Similarly, the second sensor 72 is electrically connected to an ASIC 291 of the sensor control board 29. The ASIC 291 is configured to control the second sensor 72. Although not shown in the drawings, the ASIC 291 includes a power switching circuit, an amplifier circuit and a rectifying circuit. Of the ASIC 281 and the ASIC 291, the ASIC 281 that is on the master side is directly connected to the CPU 21 and the ASIC 291 that is on the slave side is connected to the CPU 21 via the ASIC 281.

The principle of an operation by which the first sensor 71 and the second sensor 72 detect the position of the electronic pen 3 (this operation will hereinafter simply be referred to as a scanning operation, sometimes) will be briefly explained. The CPU 21 controls the ASIC 281 and the ASIC 291 and causes a current (a sending current for excitation) of a specific frequency to flow to each one of the loop coils of the first sensor 71 and the second sensor 72. In this way, a magnetic field is generated from each of the loop coils of the first sensor 71 and the second sensor 72. If the user writes information with the electronic pen 3 on the paper medium 100 that is mounted on the information input device 2 in this state, for example, the electronic pen 3 comes very close the first sensor 71 or the second sensor 72. Thus, the resonance circuit of the electronic pen 3 resonates as a result of electromagnetic induction and generates an induction field.

Next, the ASIC 281 and the ASIC 291 stop the generation of the magnetic field from the loop coils of the first sensor 71 and the second sensor 72. Further, the induction field generated from the resonance circuit of the electronic pen 3 is received by the loop coils of the first sensor 71 and the second sensor 72. The CPU 21 detects a signal current (a reception current) that is flowing through each of the loop coils of the first sensor 71 and the second sensor 72. This operation is performed one by one for all of the loop coils. The signals generated as a result of the electromagnetic induction are amplified and amplitude detection is performed by the ASIC 281 and the ASIC 291, the signals are input progressively to the CPU 21 as detection results. The CPU 21 converts each of the input signals to a digital signal that corresponds to the amplitude, namely to the voltage value of the signal. Then, The CPU 21 identifies the sensor that has detected the electronic pen 3 based on the digital signals, and detects the position of the electronic pen 3.

In a state in which the electronic pen 3 is writing information on the paper medium 100, a writing pressure is applied to the core body 31 of the electronic pen 3. The inductance of the coil 32 varies depending on the writing pressure applied to the core body 31. For this reason, the resonance frequency of the resonance circuit of the electronic pen 3 may change. The CPU 21 detects the change in the resonance frequency (a phase change) and identifies the writing pressure applied to the electronic pen 3. More specifically, the CPU 21 can determine whether or not information is being written on the paper medium 100 based on the identified writing pressure from the electronic pen 3. In a case where it is determined that the information is being written on the paper medium 100, the CPU 21 acquires the stroke data and stores the acquired stroke data in the flash ROM 22.

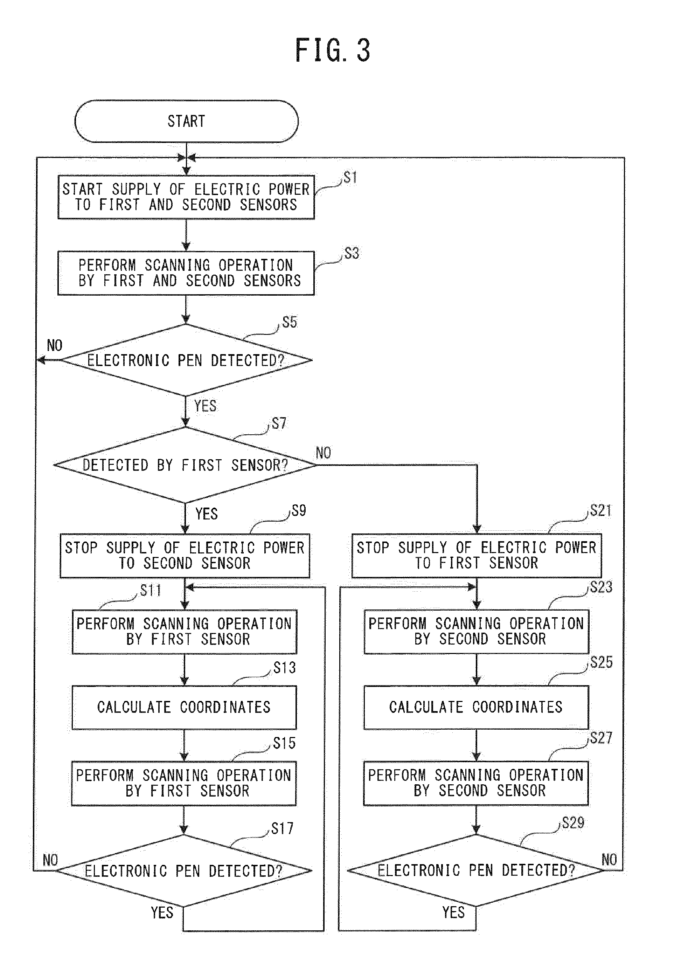

Main processing of the information input device 2 will be explained with reference to FIG. 3. The main processing shown in FIG. 3 starts when the power source of the information input device 2 is switched on, and is performed by the CPU 21 in accordance with the program stored in the flash ROM 22. The main processing ends when the power source of the information input device 2 is switched off. Data acquired in the course of the processing may be stored as applicable in the RAM 23. The CPU 21 outputs a command to the ASIC 291 via the ASIC 281. The ASIC 291 outputs detection results to the CPU 21 via the ASIC 281.

As shown in FIG. 3, first the CPU 21 starts supply of electric power to each of the first sensor 71 and the second sensor 72 by outputting a command to each of the ASIC 281 and the ASIC 291 (step S1). By the processing at step S1, each of the first sensor 71 and the second sensor 72 enters a state in which each of them can perform a scanning operation. The scanning operation is processing to detect an output signal output from the electronic pen 3. Next, the CPU 21 causes each of the first sensor 71 and the second sensor 72 to perform the scanning operation in a same period by outputting a command to each of the ASIC 281 and the ASIC 291 (step S3). The same period at step S3 refers to a range in which a period of the scanning operation by the first sensor 71 at least partially overlaps with a period of the scanning operation by the second sensor 72. At step S3, it is preferable for the scanning operation performed by each of the first sensor 71 and the second sensor 72 to be performed in a period that is considered to be substantially synchronous. The ASIC 281 and the ASIC 291 each output detection results to the CPU 21.

The CPU 21 determines whether or not one of the first sensor 71 and the second sensor 72 has detected the electronic pen 3 (step S5). In a case where a signal input from one of the ASIC 281 and the ASIC 291 is equal to or greater than a certain value, the CPU 21 determines that one of the first sensor 71 and the second sensor 72 has detected the electronic pen 3. In a case where the CPU 21 determines that neither the first sensor 71 nor the second sensor 72 has detected the electronic pen 3 (no at step S5), the CPU 21 returns to the processing at step S1. In a case where the CPU 21 determines that one of the first sensor 71 and the second sensor 72 has detected the electronic pen 3 (yes at step S5), the CPU 21 determines whether or not the first sensor 71 has detected the electronic pen 3 (step S7). In a case where an identified sensor is the first sensor 71, the CPU 21 determines that first sensor 71 has detected the electronic pen 3. The identified sensor is the sensor that has detected an output signal from the electronic pen 3 that has a largest strength. The identified sensor may be determined by comparing the strengths of the output signals output from the electronic pen 3, the strengths being represented by the detection results of the ASIC 281 and of the ASIC 291.

In a case where the first sensor 71 has detected the electronic pen 3 (yes at step S7), the CPU 21 stops the supply of electric power to the second sensor 72 by outputting a command to the ASIC 291 (step S9). Processing at step S9 is processing to stop the supply of electric power to a non-identified sensor. The non-identified sensor is one or more of the plurality of sensors that is/are not the identified sensor. Based on the command output from the CPU 21, the ASIC 291 stops the supply of electric power to the second sensor 72 by stopping operation of the power switching circuit. During a period in which the supply of electric power to the second sensor 72 is stopped, by the processing at step S9, the scanning operation is not performed by the second sensor 72.

The CPU 21 outputs a command to the ASIC 281 and causes the first sensor 71 to perform a scanning operation (step S11). The scanning operation at step S3 and the scanning operation at step S11 by the first sensor 71 may be performed by the same processing or may be performed by different processing. The ASIC 281 outputs detection results to the CPU 21. Based on the detection results output from the ASIC 281, the CPU 21 calculates coordinates of the electronic pen 3 (step S13). As described above, the detection results output from the ASIC 281 are each converted to a digital signal corresponding to the voltage value. Based on the converted digital signals, the CPU 21 calculates a position indicating a maximum voltage value in each of the X axis direction and the Y axis direction. The processing to determine the coordinates of the electronic pen 3 is known by Japanese Laid-Open Patent Application No. 2012-14411, for example, and a detailed explanation is therefore omitted here. The CPU 21 associates the writing pressure of the electronic pen 3 with the coordinates and stores the associated data in the flash ROM 22 in an order in which the coordinates are acquired. Of the data stored in this manner, the stroke data is the data that indicates the changes over time of the coordinate information for which it has been determined, based on the writing pressure, that the electronic pen 3 is being used.

The CPU 21 causes the first sensor 71 to perform a scanning operation by outputting a command to the ASIC 281 (step S15). The ASIC 281 outputs detection results to the CPU 21. Based on the detection results, the CPU 21 determines whether or not the first sensor 71 has detected the electronic pen 3 (step S17). Ia a case where the signal input from the ASIC 281 is equal to or greater than a certain value, the CPU 21 determines that the first sensor 71 has detected the electronic pen 3. In a case where the first sensor 71 has detected the electronic pen 3 (yes at step S17), the CPU 21 returns the processing to step S11. In a case where the first sensor 71 has not detected the electronic pen 3 (no at step S17), the CPU 21 returns the processing to step S1.

In the processing at step S7, in a case where the second sensor 72 has detected the electronic pen 3 (no at step S7), by outputting a command to the ASIC 281, the CPU 21 causes the supply of electric power to the first sensor 71, which is determined to be the non-identified sensor, to be stopped (step S21). Based on the command output from the CPU 21, the ASIC 281 stops the supply of electric power to the first sensor 71 by operating the power switching circuit. During a period in which the supply of electric power to the first sensor 71 is stopped, by the processing at step S21, the scanning operation is not performed by the first sensor 71.

The CPU 21 causes the second sensor 72 to perform a scanning operation by outputting a command to the ASIC 291 (step S23). The scanning operation at step S3 and the scanning operation at step S23 by the second sensor 72 may be performed by the same processing or may be performed by different processing. The ASIC 291 outputs detection results to the CPU 21. Based on the detection results output from the ASIC 291, the CPU 21 calculates coordinates of the electronic pen 3 (step S25). The processing at step S25 is performed by the same method as at step S13.

The CPU 21 causes the second sensor 72 to perform a scanning operation by outputting a command to the ASIC 291 (step S27). The ASIC 291 outputs detection results to the CPU 21. The CPU 21 determines whether or not the second sensor 72 has detected the electronic pen 3 (step S29). In a case where the signal input from the ASIC 291 is equal to or greater than a certain value, the CPU 21 determines that the second sensor 72 has detected the electronic pen 3. In a case where the second sensor 72 has detected the position of the electronic pen 3 (yes at step S29), the CPU 21 returns the processing to step S23. In a case where the second sensor 72 has not detected the position of the electronic pen 3 (no at step S29), the CPU 21 returns the processing to step S1.

In the information input device 2 of the present embodiment, the electronic pen 3 corresponds to an example of a writing tool of the present invention. The first sensor 71 and the second sensor 72 correspond to an example of a plurality of detection means. The housings 8L and 8R correspond to an example of a plurality of housings. The CPU 21 that performs the processing at step S3 is an example of first detection control means of the present invention. The CPU 21 that performs the processing at step S5 and step S7 is an example of detection identification means of the present invention. The CPU 21 that performs the processing at step S9 or at step S21 is an example of electric power control means of the present invention. The CPU 21 that performs the processing at step S11 or at step S23 is an example of second detection control means of the present invention. The CPU 21 that performs the processing at step S13 or at step S25 is an example of position identification means of the present invention.

Based on the detection results of the ASIC 281 and the ASIC 291, the information input device 2 supplies electric power only to one of the first sensor 71 and the second sensor 72, which are a plurality of sensors. More specifically, the information input device 2 supplies electric power only to the sensor (namely, the identified sensor) that has detected the output signal of the electronic pen 3 having the largest strength, and stops the supply of electric power to the other sensor (namely, the non-identified sensor) (step S9 or step S21). In comparison to a case in which the power source of the plurality of sensors ( the first sensor 71 and the second sensor 72) is constantly on, the information input device 2 can reduce power consumption. Further, after the information input device 2 has stopped the supply of electric power to the non-identified sensor, the information input device 2 controls the identified sensor and identifies the position of the electronic pen 3 (step S13 or step S25). For that reason, in comparison to a case in which the identification of the position of the electronic pen 3 is performed in a state in which the electric power is supplied to both the first sensor 71 and the second sensor 72, in the information input device 2, there is little influence of the magnetic field generated by the non-identified sensor that is included in the detection result of the identified sensor. As a result, the information input device 2 can identify the electronic pen 3 more accurately than in known art. In other words, the information input device 2 can improve the detection accuracy of the position of the electronic pen 3 compared to known art.

As in the above-described embodiment, with an information input device of the type in which the electronic pen outputs the output signal in response to the input signal output by the sensor, it is possible that the input signal output by the non-identified sensor may be received by the identified sensor. In this type of case, it is possible that the information input device cannot accurately identify the position of the electronic pen 3. In contrast to this, with the information input device 2, when the position of the electronic pen 3 is identified, the supply of electric power to the non-identified sensor is stopped and thus the input signal from the non-identified sensor is not output to the electronic pen 3. As a result, the information input device 2 can reliably avoid deterioration in the detection accuracy of the position of the electronic pen 3 by the identified sensor due to the input signal being output by the non-identified sensor.

In order to identify the sensor that has detected the output signal having the largest strength among the output signals of the electronic pen 3, the information input device 2 synchronously performs processing to perform the scanning operation by the plurality of sensors. Thus, in comparison to a case in which scanning operations are performed by a plurality of sensors at different timings in order to identify the sensor that has detected the output signal having a largest strength and indicating the position of the electronic pen 3, the information input device 2 can shorten an amount of time required for the processing to identify the identified sensor. The first sensor 71 and the second sensor 72 are separately housed in the different housings, namely, in the housing 8L and the housing 8R, respectively. As a result, the information input device 2 can stop the supply of the electric power to the sensor performing the scanning operation for each of the housings.

The information input device of the present invention is not limited to the above-described embodiment, and various modifications may be made within the gist of the present invention. For example, any one of the following modifications (A) to (C) may be made as appropriate.

(A) The information input device 2 includes the first sensor 71 and the second sensor 72 as the two sensors, but the number of sensors may be three or more. The first sensor 71 and the second sensor 72 are housed in the individual housings 8L and 8R, respectively, but some or all of the plurality of sensors may be housed in the same housing. The shape and the size etc. of the housings 8L and 8R may be changed as appropriate. The information input device 2 causes a magnetic field to be generated from the loop coils of each of the first sensor 71 and the second sensor 72 and causes the resonance circuit of the electronic pen 3 to resonate due to electromagnetic induction. However, with respect to a type of the electronic pen 3 that has a built-in battery, the resonance circuit of the electronic pen 3 need not necessarily be caused to resonate due to electromagnetic induction. The information input device 2 can detect the writing pressure of the electronic pen 3, but the information input device 2 need not necessarily be able to detect the writing pressure, and the detection result may be stored in a storage device such as the flash ROM 22 without taking the writing pressure into account. The electrical configuration of the information input device 2 may be changed as appropriate. For example, the circuit to switch the supply of electric power to the first sensor 71 and the second sensor 72 may be provided on the main board 20.

(B) The program that includes the instructions to perform the main processing shown in FIG. 3 need not necessarily be stored in a storage device provided in the information input device 2 until the information input device 2 executes the program, and a method to acquire the program, an acquisition path and a device to store the programs may be changed as appropriate. Accordingly, the program to be executed by a processor provided in the information input device 2 may be received from another device via a cable or wireless communication and may be stored in a storage device such as a flash memory or the like. The other device may include, for example, a personal computer or a server that is connected via a network.

(C) Each of the steps in the main processing shown in FIG. 3 are not limited to the example of being performed by the CPU 21, and some or all of the steps may be performed by another electronic device (an ASIC, for example). Further, each of the steps in the above-described processing may be processed in a distributed manner by a plurality of electronic devices (by a plurality of CPUs, for example). Additionally, the order of each of the steps in the processing of the above-described embodiment may be changed, or steps may be omitted or added as necessary. Furthermore, a case in which an operating system (OS) etc. that is operating on the information input device 2 performs part or all of actual processing based on instructions from the CPU provided in the information input device 2 and the functions of the above-described embodiment are realized by the processing, is also included in the scope of the present invention.

With respect to some of the steps of the main processing, modifications may be made in the following manner, for example. In the processing at step S3, the CPU 21 causes the first sensor 71 and the second sensor 72 to synchronously perform the scanning operation, but the CPU 21 may cause the first sensor 71 and the second sensor 72 to perform the scanning operation sequentially. In this case, in a case where the electronic pen 3 is detected based on the signal acquired from the sensor that first performs the scanning operation, the CPU 21 may omit the scanning operation by the other sensor and may stop the supply of electric power to the other sensor. Further, in a case where a scanning operation to detect the writing tool is the same as a scanning operation to detect a position of the writing tool, for example, the CPU 21 may calculate the coordinates (step S13) based on the detection results of the scanning operation of the processing at step S15 (yes at step S17). The CPU 21 may calculate the coordinates (step S25) based on the detection results of the scanning operation of the processing at step S27 (yes at step S29).

## Claims

1. An electromagnetic induction-type information input device configured to acquire information input by a user using a writing tool, the information input device comprising:
a plurality of detection means for detecting an output signal output from the writing tool and for outputting a detection result;
first detection control means for causing each of the plurality of detection means to perform detection processing that detects the output signal;
detection identification means for identifying identified detection means, based on the detection results output from the plurality of detection means in response to the control of the first detection control means, the identified detection means being detection means, among the plurality of detection means, that has detected an output signal having a largest strength among the output signals detected by the plurality of detection means;
electric power control means for stopping a supply of electric power to non-identified detection means, the non-identified detection means being one or more of the plurality of detection means, other than the identified detection means identified by the detection identification means;
second detection control means for causing the identified detection means to perform the detection processing after the electric power control means has stopped the supply of electric power to the non-identified detection means; and
position identification means for identifying a position of the writing tool, based on the detection result output from the identified detection means in response to the control of the second detection control means.

2. The information input device according to claim 1, wherein
each of the plurality of detection means outputs an input signal to the writing tool and detects the output signal output from the writing tool in response to the input signal.

3. The information input device according to claim 1 or 2, wherein
the first detection control means causes each of the plurality of detection means to perform the detection processing in a same period.

4. The information input device according to any one of claims 1 to 3, further comprising:
a plurality of housings for separately housing the plurality of detection means, respectively.
